# FASCICULE DE BREVET EUROPEEN

(11) **EP 3 224 571 B1**
(45) Date de publication et mention de la délivrance du brevet: **15.04.2020**
(21) Numéro de dépôt: 15805591.3
(22) Date de dépôt: 18.11.2015
(51) Int. Cl.: G01B 11/06, G01N 21/63

(54) **DISPOSITIF DE CARACTÉRISATION PAR INTERFÉROMÉTRIE, ET PROCÉDÉ CORRESPONDANT**
VORRICHTUNG ZUR INTERFEROMETRISCHEN CHARAKTERISIERUNG UND ENTSPRECHENDES VERFAHREN
INTERFEROMETRIC CHARACTERISATION DEVICE, AND CORRESPONDING METHOD

(30) Priorité: 27.11.2014 FR 1461563
(43) Date de publication de la demande: 04.10.2017
(73) Titulaire: Menapic, 59000 Lille (FR); Centre National de la Recherche Scientifique CNRS, 75794 Paris Cedex 16 (FR); Groupe Hei Isa Isen, 59800 Lille (FR)
(72) Inventeur: DEVOS, Arnaud, 59320 Ennetieres en Weppes (FR); SADTLER, Sabrina, 59000 Lille (FR)
(74) Mandataire: Priori, Enrico
(86) Numéro de dépôt international: PCT/FR2015/053112
(87) Numéro de publication internationale: WO 2016/083706

(56) Documents cités:
- EP-A1- 1 172 643
- EP-A2- 0 091 826
- WO-A1-00/59266
- GABRIEL M C ET AL: "MEASUREMENT OF ULTRAFAST OPTICAL NONLINEARITIES USING A MODIFIED SAGNAC INTERFEROMETER", OPTICS LETTERS, OPTICAL SOCIETY OF AMERICA, US, vol. 16, no. 17, 1 septembre 1991 (1991-09-01), pages 1334-1336, XP000226928, ISSN: 0146-9592

## Description

### Arrière-plan de l'invention

La présente invention concerne un dispositif de caractérisation non-destructive d'une structure. Plus précisément, la présente invention se rapporte à la caractérisation d'une structure par onde acoustique générée et détectée par impulsion lumineuse.

Il est connu d'utiliser un laser à impulsions courtes (par exemple femtoseconde) émettant une onde de longueur d'onde fixée, comme source lumineuse pour produire un premier faisceau, que l'on sépare par une séparatrice en un faisceau dit « pompe » et un faisceau dit « sonde ». On fait ensuite varier le chemin optique du faisceau sonde par un miroir asservi en position. Il est alors connu que les propriétés de la structure sous l'effet des faisceaux émis provoquent une modification dans les propriétés de réflexion (ou de transmission) de l'onde sonde. En particulier, et de façon connue en soi, en observant la modification de réflexion en fonction du temps, il est possible de déterminer des échos caractéristiques des interfaces d'une structure. L'analyse du signal à écho permet alors de déduire par exemple l'épaisseur du matériau, si l'on connaît la vitesse de propagation de l'onde sonore dans le milieu.

Un dispositif alternatif pour étudier les variations du faisceau sonde est d'utiliser un interféromètre. Le document US 6 549 285 B1 décrit un dispositif de caractérisation comportant notamment un interféromètre de Sagnac. Un tel interféromètre permet notamment de caractériser un échantillon à l'aide de deux rayons sonde successifs, le premier rayon atteignant l'échantillon avant le faisceau pompe et le deuxième après le faisceau pompe, les deux rayons interférant ensemble dans un deuxième temps pour déterminer les différences de phase et/ou d'amplitude intervenues entre les deux rayons sonde. Afin de s'assurer que les différences de phase et/ou d'amplitude existantes entre les deux rayons sonde sont bien dues aux interactions avec l'échantillon, et non à des causes extérieures, un interféromètre de Sagnac est utilisé pour faire parcourir aux deux rayons sonde exactement le même trajet optique. En particulier, les deux faisceaux sonde parcourent un trajet optique en forme de boucle, mais dans des sens contraires : on parle ainsi de faisceaux contrarotatifs. De cette façon, toute modification apparaissant dans le dispositif impacte de manière égale chacun des deux rayons, et ne modifie donc pas les interférences obtenues en sortie de dispositif qui ne résultent que des interactions avec l'échantillon à caractériser.

Cependant, on constate que la sensibilité d'un tel dispositif n'est pas toujours satisfaisante, notamment en fonction du type (par exemple du matériau) de l'échantillon à analyser. Ainsi, il sera possible d'obtenir une sensibilité élevée avec certains échantillons, et, au contraire, une sensibilité très faible avec d'autres échantillons, sans qu'on sache l'origine de cette différence. Or, une diminution de la sensibilité des mesures entraine une diminution de la qualité de celles-ci et de leur précision. Par ailleurs, l'interféromètre de Sagnac étant conçu de manière à obtenir les mêmes modifications sur chacun des deux rayons contrarotatifs, les améliorations recherchées portent essentiellement sur le traitement du signal, en aval de l'interféromètre de Sagnac, sans que cela ne permette d'obtenir des résultats totalement satisfaisants.

### Objet et résumé de l'invention

La présente invention vise à résoudre les différents problèmes techniques énoncés précédemment. En particulier, la présente invention vise à proposer un dispositif de caractérisation, et le procédé correspondant, permettant d'améliorer, voire d'optimiser, les mesures effectuées sur un échantillon, quelle que soit la nature de l'échantillon, avec un dispositif de caractérisation comportant un interféromètre de Sagnac.

Ainsi, selon un aspect, il est proposé un dispositif de caractérisation d'un échantillon, comportant : une source configurée pour former des ondes électromagnétiques, un capteur optique configuré pour détecter des ondes électromagnétiques interférentes, un faisceau pompe, configuré pour créer une onde acoustique dans l'échantillon, et un interféromètre optique. L'interféromètre optique comporte, lors de la caractérisation d'un échantillon :
- une partie bouclée dans laquelle deux ondes électromagnétiques se propagent de manière contrarotative, comprenant un moyen séparateur configuré pour former, d'une part, lesdites deux ondes électromagnétiques contrarotatives à partir des ondes électromagnétiques issues de la source, et, d'autre part, les ondes électromagnétiques interférentes détectées par le capteur à partir desdites deux ondes électromagnétiques contrarotatives, et
- un moyen de déphasage entre les deux ondes contrarotatives configuré pour créer un déphasage de Pi/2 entre les deux ondes contrarotatives, le moyen de déphasage étant monté dans la partie uclée de l'interféromètre optique, l'échantillon étant destiné à être placé dans l'interféromètre optique de manière à ce que le chemin optique entre le moyen séparateur et l'échantillon est différent entre les deux ondes contrarotatives.
Le moyen de déphasage est un moyen de déphasage ajustable pour obtenir, après placement de l'échantillon dans l'interféromètre optique, des ondes contrarotatives en quadrature de phase.

Ainsi, grâce au moyen de déphasage ajustable, il devient possible d'introduire un déphasage entre les deux ondes contrarotatives, au sein même de l'interféromètre de Sagnac. On entend par interféromètre de Sagnac, un interféromètre optique comportant une partie fermée en anneau (ou partie bouclée) dans laquelle se propagent deux ondes électro-magnétiques en sens opposés (ou de manière contrarotative). L'échantillon est placé dans l'interféromètre de Sagnac de manière non-symétrique par rapport à l'entrée de l'interféromètre, de manière à ce que les deux ondes contrarotatives ne parviennent pas à l'échantillon en même temps : ainsi, il existe un trajet optique entre l'entrée de l'interféromètre et l'échantillon plus court que l'autre : on désignera ainsi par « bras court » le plus petit des trajets optiques entre l'entrée et l'échantillon, et par « bras long » le plus grand des trajets optiques entre l'entrée et l'échantillon.

Grâce au dispositif selon l'invention, le déphasage et les différences d'amplitude entre les deux ondes contrarotatives ne sont plus seulement dus à l'échantillon, mais également au moyen de déphasage ajustable : il est alors possible de faire varier librement le déphasage entre les deux ondes contrarotatives de manière à ce que les ondes interférentes soient en quadrature de phase.

En effet, le demandeur a constaté de manière surprenante que, en plus du déphasage dû à l'onde acoustique dans l'échantillon, celui-ci pouvait également créer un déphasage entre les deux ondes contrarotatives. Or, un tel déphasage, indépendant du déphasage dû à l'onde acoustique, entraîne un décalage de la figure d'interférences mesurée par les capteurs. En particulier, un échantillon peut être amené à créer un déphasage entre les deux ondes contrarotatives qui conduit à avoir un extremum d'intensité, ce qui ne permet pas de mesurer de manière précise et sensible les variations autour de cet extremum. Au contraire, grâce au dispositif de l'invention, il est possible de modifier le déphasage entre les deux ondes contrarotatives de manière à compenser ce déphasage supplémentaire dû à l'échantillon, et de manière à se retrouver dans des conditions de variations linéaires de l'intensité des interférences, ce qui optimise la sensibilité et donc la précision des mesures.

Le moyen de déphasage ajustable est ainsi un moyen de modulation (ou de changement ou d'ajustement) du déphasage entre les deux ondes contrarotatives. En particulier, contrairement à une lame quart d'onde qui peut introduire un déphasage fixe et déterminé entre deux ondes contrarotatives, le moyen de déphasage ajustable permet d'ajuster ce déphasage pour compenser celui introduit par l'échantillon. Le moyen de déphasage ajustable peut ainsi être un modulateur adapté, commandé ou non, ou bien peut comprendre un compensateur de Babinet.

Ainsi, grâce au dispositif selon l'invention, il est possible de s'adapter à tout type de matériau, de manière à le caractériser précisément et dans des conditions optimales.

Préférentiellement, l'échantillon est destiné à réfléchir les deux ondes contrarotatives. Dans ce cas, l'échantillon est destiné à former un des miroirs de l'interféromètre de Sagnac : il peut former un des miroirs de la partie bouclée, ou au contraire être en-dehors de la partie bouclée. C'est lors de la réflexion sur l'échantillon que se créé alors le déphasage entre les deux ondes contrarotatives de l'interféromètre de Sagnac.

Préférentiellement, le moyen de déphasage ajustable comprend un compensateur de Babinet. Le compensateur de Babinet est un dispositif permettant de modifier le déphasage entre deux ondes électromagnétiques présentant des polarisations différentes. Plus précisément, le compensateur de Babinet comprend deux prismes en matériaux biréfringents qui coulissent l'un sur l'autre, de manière à former une lame de retard. Le compensateur de Babinet permet notamment, par coulissement des deux prismes l'un par rapport à l'autre, d'ajuster le déphasage entre un axe lent et un axe rapide du compensateur.

Préférentiellement, les ondes contrarotatives sont polarisées rectilignement, et le moyen de déphasage ajustable comprend un moyen de rotation de 90° de la polarisation rectiligne des ondes contrarotatives, par exemple une lame demi-onde dont les axes sont disposés à 45° de la polarisation rectiligne des ondes contrarotatives.

Selon ce mode de réalisation, les ondes contrarotatives sont des ondes polarisées rectilignement, et le moyen de déphasage ajustable comprend d'une part une lame demi-onde spécifique permettant de faire tourner de 90° la polarisation des ondes contrarotatives, et d'autre part un compensateur de Babinet qui permet d'introduire un déphasage différent selon l'orientation de la polarisation de l'onde qui le traverse. Le moyen de rotation et le compensateur de Babinet sont notamment montés de manière à ce que les deux ondes contrarotatives présentent des polarisations rectilignes perpendiculaires entre elles lorsqu'elles traversent le compensateur de Babinet. Un tel mode de réalisation, qui permet d'introduire un déphasage entre les deux ondes contrarotatives en fonction de leur polarisation, permet une mise en œuvre aisée, grâce notamment à tous les éléments optiques destinés à modifier la polarisation ou à filtrer différemment la lumière selon sa polarité.

Selon un mode de réalisation, le dispositif comprend également un deuxième moyen séparateur monté en-dehors de l'interféromètre optique et recevant des ondes interférentes, et un deuxième capteur optique configuré pour détecter des ondes électromagnétiques interférentes reçues par le deuxième moyen séparateur.

Selon ce mode de réalisation, les ondes interférentes ne sont pas mesurées qu'une seule fois, mais deux fois, à l'aide de deux capteurs optiques, le deuxième capteur optique étant monté dans le dispositif avec un deuxième moyen séparateur, ce qui permet de créer également un déphasage entre les deux figures d'interférence mesurées par les deux capteurs. Il devient ainsi aisé d'ajuster le déphasage créé par le moyen de déphasage ajustable, de manière à obtenir les figures d'interférences voulues sur les deux capteurs optiques. En particulier, il devient possible d'ajuster le déphasage de manière à obtenir une figure d'interférences identique (une même intensité) sur les deux capteurs optiques, en absence d'ondes acoustiques dans l'échantillon. Un tel dispositif permet donc de compenser facilement et rapidement le déphasage créé par la présence de l'échantillon dans l'interféromètre de Sagnac, en absence même d'ondes acoustique dans l'échantillon. Par ailleurs, en présence d'ondes acoustiques dans l'échantillon, il devient particulièrement aisé d'interpréter les variations du signal reçu, en soustrayant le signal d'un des capteurs à celui de l'autre capteur : on obtient notamment un signal représentatif du déplacement de la surface de l'échantillon sous l'effet de l'onde acoustique.

Préférentiellement, le moyen de déphasage ajustable est configuré pour obtenir, après placement de l'échantillon dans l'interféromètre optique, des ondes interférentes de même intensité sur les deux capteurs.

Préférentiellement, le moyen de déphasage ajustable est commandable électriquement, notamment en fonction du signal du ou des capteurs optiques. Selon un alternative, le dispositif peut comprendre un moyen de déphasage ajustable automatisé configuré pour modifier le déphasage entre les deux ondes contrarotatives afin d'obtenir, en absence d'ondes acoustiques dans l'échantillon, la même intensité sur les deux capteurs.

Le dispositif comprend également un faisceau pompe, configuré pour créer une onde acoustique dans l'échantillon, de préférence après le passage de la première onde contrarotative sur l'échantillon et avant le passage de la deuxième onde contrarotative sur l'échantillon.

Le faisceau pompe permet de former les ondes acoustiques dans l'échantillon : ce sont ces ondes acoustiques qui vont modifier le déphasage et l'intensité de la deuxième onde contrarotative par rapport à la première, ce qui pourra être mesuré par les capteurs du dispositif. Il s'agit ici d'un exemple d'application du dispositif de caractérisation selon l'invention.

Cependant, le dispositif de caractérisation selon l'invention peut également être utilisé dans d'autres domaines d'application, tels que la caractérisation par relaxations électroniques ou thermiques.

Préférentiellement, le dispositif comprend également un moyen de modification de la longueur du chemin optique de la deuxième onde contrarotative sur l'échantillon, de manière à faire varier la durée entre la formation de l'onde acoustique dans l'échantillon et le passage de la deuxième onde contrarotative sur l'échantillon.

Un tel moyen permet en particulier d'ajuster l'intervalle de temps entre la création de l'onde acoustique et l'analyse de l'échantillon. On peut ainsi étudier le comportement de l'échantillon en réponse à la propagation de l'onde acoustique, en différents instants.

Selon un autre aspect, l'invention concerne également un procédé de caractérisation d'un échantillon par un interféromètre optique. L'interféromètre optique comprend : une partie bouclée dans laquelle deux ondes électromagnétiques se propagent de manière contrarotative, comprenant un moyen séparateur configuré pour former, d'une part, lesdites deux ondes électromagnétiques contrarotatives à partir d'ondes électromagnétiques issues d'une source, et, d'autre part, des ondes électromagnétiques interférentes à partir desdites deux ondes électromagnétiques contrarotatives.
Selon le procédé de caractérisation :
- on place un échantillon dans ladite partie bouclée, de manière à ce que le chemin optique entre le moyen séparateur et l'échantillon est différent entre les deux ondes contrarotatives,
- on sépare les ondes électromagnétiques de source, en deux ondes électromagnétiques se déplaçant de manière contrarotative dans ladite partie bouclée comportant l'échantillon,
- on forme des ondes interférentes à partir des ondes contrarotatives en sortie de la partie bouclée, et
- on mesure l'intensité des ondes interférentes.
En particulier, on ajuste, dans la partie bouclée, le déphasage entre les deux ondes contrarotatives de manière à ce qu'elles soient en quadrature de phase.

Préférentiellement, on ajuste le déphasage entre les deux ondes contrarotatives en fonction de l'intensité des ondes interférentes.

Préférentiellement, on fait varier le déphasage entre les deux ondes contrarotatives de manière à mesurer au moins deux extrema de l'intensité des ondes interférentes, puis on ajuste le déphasage de manière à obtenir une intensité égale à la moyenne des deux extrema.

Préférentiellement, un deuxième moyen séparateur est monté en-dehors de l'interféromètre optique, le deuxième moyen séparateur recevant des ondes interférentes, et :
- on mesure l'intensité des ondes interférentes reçues par le deuxième moyen séparateur, et
- on ajuste le déphasage entre les deux ondes contrarotatives de manière à ce que les deux intensités mesurées soient égales.

Préférentiellement, on forme, dans l'échantillon, une onde mécanique avec une onde électromagnétique pompe, l'onde électromagnétique pompe atteignant l'échantillon après la première onde contrarotative et avant la deuxième onde contrarotative.

Préférentiellement, on fait varier la durée entre le moment pendant lequel on forme, dans l'échantillon, l'onde mécanique avec une onde électromagnétique pompe, et le moment où la deuxième onde contrarotative atteint l'échantillon.

### Brève description des dessins

L'invention et ses avantages seront mieux compris à la lecture de la description détaillée d'un mode de réalisation particulier, pris à titre d'exemple nullement limitatif et illustré par les dessins annexés sur lesquels :
- la figure **1** est une représentation schématique d'un dispositif de caractérisation selon l'invention,
- la figure **2** est un exemple de figure de réglage du dispositif selon l'invention,
- la figure **3** est un exemple de résultat pouvant être obtenu avec un dispositif selon l'invention, avec ou sans ajustement du déphasage
- la figure **4** est un exemple d'organigramme d'un mode de mise en œuvre d'un procédé selon l'invention.

### Description détaillée de l'invention

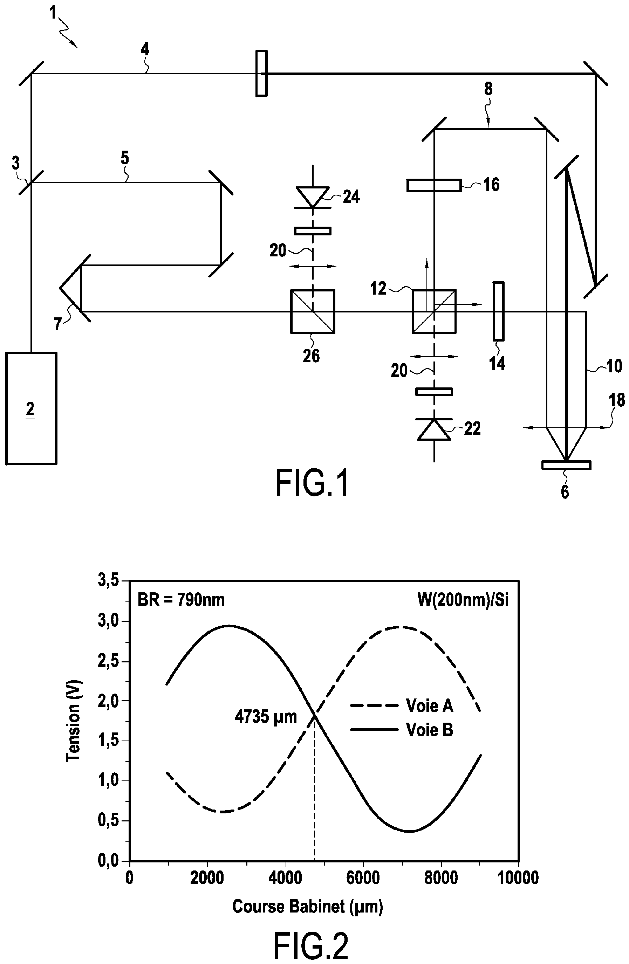

La figure **1** illustre de manière schématique un exemple de mode de réalisation d'un dispositif de caractérisation **1** selon l'invention.

Le dispositif **1** ainsi comprend une source laser **2** à impulsions courtes. Les impulsions courtes de la source doivent être adaptées à la résolution temporelle désirée. Des impulsions de l'ordre de 1 ps ou de 0, 1 ps sont envisageables.

Cette source peut être accordable en longueur d'onde par l'intermédiaire d'un oscillateur accordable de type titane:saphir, pouvant produire des impulsions de 120 fs à un taux de répétition de 76 MHz centré sur une longueur d'onde accordable entre 700 nm et 990 nm.

Cette source produit un rayonnement qui est séparé par une séparatrice **3** en un rayonnement de pompe **4** et un rayonnement de sonde **5**, tous deux destinés à interagir avec l'échantillon **6** à analyser.

Le rayonnement de sonde **5** est soumis à une variation de chemin optique par rapport au rayonnement de pompe **4**, par exemple par l'intermédiaire d'un miroir mobile **7** asservi en position, afin de le faire parvenir sur l'échantillon **6** avec un décalage temporel par rapport au rayonnement de pompe.

Le rayonnement de sonde **5** est ensuite introduit dans un interféromètre optique **8**, par exemple un interféromètre de Sagnac, comportant une partie bouclée **10**, par exemple en forme de « **8** ». Plus précisément, l'interféromètre optique **8** comprend un moyen séparateur **12** permettant de créer, à partir du rayonnement (ou faisceau) de sonde **5** deux ondes contrarotatives dans la partie bouclée **10** de l'interféromètre optique **8** : la première onde contrarotative est une onde qui va traverser le moyen séparateur **12**, tandis que la deuxième onde contrarotative est une onde qui va être réfléchie par le moyen séparateur **12.** La partie bouclée **10** de l'interféromètre optique **8** étant fermée, les deux ondes créées par le moyen séparateur **12** vont s'y propager selon le même parcours, mais en sens opposé : elles sont ainsi désignées par « ondes contrarotatives ». Le moyen séparateur **12** peut être par exemple un cube séparateur ou une lame séparatrice.

La partie bouclée **10** comprend notamment un emplacement pour l'échantillon **6** à analyser. Dans le mode de réalisation décrit ici, l'échantillon est réfléchissant, et est ainsi utilisé comme un des miroirs de la partie bouclée **10** de l'interféromètre optique **8.** Par ailleurs, l'emplacement pour l'échantillon **6** est disposé de manière asymétrique dans la partie bouclée **10** : ainsi, comme représenté sur la figure **1**, l'onde électromagnétique traversant le moyen séparateur **12** atteint l'échantillon **6** plus rapidement que l'onde réfléchie par le moyen séparateur **12.** On obtient ainsi, dans l'interféromètre optique **8**, deux chemins optiques différents pour atteindre l'échantillon **6** : un chemin rapide désigné dans la suite par « bras court » et un chemin long désigné dans la suite par « bras long » .

La partie bouclée **10** comprend également un moyen de déphasage ajustable permettant d'ajuster le déphasage entre les deux ondes contrarotatives.

A des fins de simplification, on considèrera dans la suite de la description, que le rayonnement de sonde **5** est polarisé rectilignement.

Ainsi, la partie bouclée **8** comprend une lame demi-onde **14** et un compensateur de Babinet **16.** La lame demi-onde et le compensateur de Babinet forment un moyen de déphasage ajustable. Plus précisément, la lame demi-onde **14** est positionnée avec ses axes orientés de 45° par rapport à la polarisation des ondes contrarotatives, de manière à faire tourner de 90° la polarisation de l'onde contrarotative le traversant. Quant au compensateur de Babinet, celui-ci est orienté de manière à ce que l'un de ses axes (axe lent ou axe rapide) soit orienté selon la polarisation de l'onde de sonde **5.**

La partie bouclée **10** comprend enfin une optique **18** permettant de focaliser les ondes contrarotatives sur l'échantillon **6.**

Après réflexion sur l'échantillon **6**, les ondes contrarotatives se dirigent vers le moyen séparateur **12** qui va permettre de former, à partir des deux ondes contrarotatives, des ondes interférentes **20**, qui vont être mesurées par un premier capteur optique **22.**

Le premier capteur optique **22** est monté perpendiculaire à l'axe d'entrée du faisceau sonde **5** dans le moyen séparateur **12.** Ainsi, le premier capteur optique **22** reçoit d'une part l'onde contrarotative qui a traversé deux fois le moyen séparateur **12**, et d'autre part l'onde contrarotative qui a été réfléchie deux fois par le moyen séparateur **12.**

Afin de compenser le déphasage créé par le moyen séparateur **12** sur les deux ondes contrarotatives mesurées par le premier capteur **22**, un deuxième capteur optique **24** est monté dans le dispositif de caractérisation **1.** Le deuxième capteur **24** est monté dans l'axe d'entrée du faisceau sonde **5** dans le moyen séparateur **12.** En particulier, le deuxième capteur est monté en aval d'un deuxième moyen séparateur **26**, par exemple un cube séparateur ou une lame séparatrice, disposé sur la direction d'entrée (et également de sortie) du faisceau sonde **5** dans le moyen séparateur **12.** Ainsi, le deuxième capteur optique **24** reçoit d'une part les ondes contrarotatives qui, chacune, ont traversé une fois le moyen séparateur **12** et ont été réfléchies une fois par le moyen séparateur **12**, puis les deux ondes interférentes sont réfléchies par le deuxième séparateur **26** pour être mesurées par le deuxième capteur **24.**

De manière avantageuse, et afin d'éviter des pertes énergétiques sur le faisceau sonde **5**, le moyen séparateur **26** peut être un cube polarisant. En effet, le faisceau sonde **5** et les ondes interférentes **20** étant polarisés de manière différente au niveau du moyen séparateur **26**, le cube polarisant peut être choisi de manière à laisser passer intégralement une polarisation (celle du faisceau sonde **5**) et à réfléchir intégralement la polarisation perpendiculaire (celle des ondes interférentes **20**).On obtient ainsi, en sortie de chaque capteur optique **22**, **24**, un signal représentatif des interférences entre les deux ondes contrarotatives, et donc représentatif des variations de l'échantillon sous l'effet de l'onde acoustique générée par le faisceau pompe **4.**

De plus, lorsque les ondes interférentes **20** sont en quadrature de phase (c'est-à-dire lorsque le moyen de déphasage ajustable est réglé), l'utilisation d'un deuxième capteur **24** dans le dispositif de caractérisation **1** permet également, en soustrayant le signal du deuxième capteur **24** du signal du premier capteur **22**, d'obtenir directement un signal représentatif du déplacement de la surface de l'échantillon sous l'effet de l'onde acoustique. On obtient donc les données de caractérisation facilement, et qui sont aisées à interpréter, en évitant des étapes de traitement de signal supplémentaires en aval du dispositif de caractérisation **1.**

En utilisation, le laser émet d'une part un faisceau pompe **4** et un faisceau sonde **5.** Le faisceau sonde **5** présente une polarisation rectiligne dans le plan de la figure **1****,** atteint le moyen séparateur **12** et entre dans l'interféromètre optique **8** sous forme d'une première onde contrarotative et d'une deuxième onde contrarotative.

La première onde contrarotative entre dans l'interféromètre optique **8** en traversant le moyen séparateur **12 :** cette première onde contrarotative parcourt le « bras court ». La première onde contrarotative traverse la lame demi-onde **14** pour obtenir une polarisation rectiligne perpendiculaire au plan de la figure **1**, puis atteint l'échantillon **6** qui la réfléchit. La première onde contrarotative est la première onde à être réfléchie par l'échantillon **6**, avant le faisceau pompe et l'autre onde contrarotative. La première onde contrarotative correspond donc à l'état de l'échantillon « au repos », en absence d'onde acoustique. La première onde contrarotative parcourt ensuite le « bras long » en traversant le compensateur de Babinet **16** qui est réglé, par défaut de manière à introduire un déphasage de Pi/2 entre son axe lent et son axe rapide, ceux-ci étant orientés respectivement dans le plan de la figure **1** et perpendiculairement au plan de la figure **1****.** La première onde contrarotative traverse donc le compensateur Babinet **16** selon son axe rapide, puis revient au moyen séparateur **12.**

La première onde contrarotative sort alors de l'interféromètre optique **8** : d'une part en traversant à nouveau le moyen séparateur **12** pour atteindre le première capteur optique **22**, et d'autre part en étant réfléchie par le moyen séparateur **12** pour atteindre le deuxième moyen séparateur **26** puis le deuxième capteur optique **24.**

La deuxième onde contrarotative entre dans l'interféromètre optique **8** en étant réfléchie par le moyen séparateur **12** : cette deuxième onde contrarotative parcourt le « bras long » en traversant le compensateur de Babinet **16** selon son axe lent qui est orienté dans le plan de la figure **1**, puis atteint l'échantillon **6** qui la réfléchit. La deuxième onde contrarotative est la dernière onde à être réfléchie par l'échantillon 6, après la première onde contrarotative et après le faisceau pompe. La deuxième onde contrarotative permet donc de connaître l'état de l'échantillon en présence de l'onde acoustique.

Enfin la deuxième onde contrarotative traverse la lame demi-onde **14** pour obtenir une polarisation rectiligne perpendiculaire au plan de la figure **1****.**

La deuxième onde contrarotative sort alors de l'interféromètre optique **8 :** d'une part en étant à nouveau réfléchie par le moyen séparateur **12** pour atteindre le première capteur optique **22**, et d'autre part en traversant le moyen séparateur **12** pour atteindre le deuxième moyen séparateur **26** puis le deuxième capteur optique **24**.

Le premier et le deuxième capteur mesurent ainsi, en fonction du temps, les variations d'intensité dues aux interférences entre les deux ondes contrarotatives, les interférences traduisant le déphasage créé par la propagation de l'onde acoustique dans l'échantillon **6.**

Cependant, l'échantillon **6** pouvant créer également un déphasage entre les deux ondes contrarotatives, même en l'absence d'onde acoustique, c'est-à-dire sans faisceau pompe, le dispositif de caractérisation **1** comprend également le compensateur de Babinet **16** qui permet d'introduire un déphasage supplémentaire entre son axe rapide et son axe lent, c'est-à-dire entre les deux ondes contrarotatives. Ce déphasage supplémentaire est destiné à annuler celui introduit par l'échantillon **6**, en absence d'onde acoustique. A cet effet, on mesure la figure d'interférence obtenue avec l'échantillon à caractériser, en absence d'onde acoustique, c'est-à-dire en absence de faisceau pompe, et en fonction du déphasage introduit par le compensateur de Babinet. On obtient ainsi une graphique correspondant à la figure **2** sur laquelle est représentée l'évolution du signal sur les deux capteurs **22**, **24**. On observe, comme toute figure d'interférences, une succession de minima et de maxima, sous forme de sinusoïde. Une telle procédure de réglage permet ainsi, d'une part, de vérifier que les valeurs mesurées par le dispositif de caractérisation **1** correspondent bien à des interférences (la variation de la course du compensateur de Babinet est similaire à un déplacement d'une onde acoustique en surface d'un échantillon) et, d'autre part, de régler de manière adéquate le compensateur de Babinet **16.**

Ainsi, afin d'optimiser la précision des mesures effectuées, le compensateur de Babinet **16** est réglé de manière à obtenir, en absence d'onde acoustique, une figure d'interférence égale à la moyenne du minimum et du maximum, c'est-à-dire au niveau de la partie linéaire des courbes de la figure **2****.** Sur la figure **2**, un tel réglage est obtenu pour une course du compensateur de Babinet de 4735µm. Pour obtenir ce réglage, on peut : soit déterminer le déphasage correspondant à la moyenne des extrema mesurés par un seul capteur optique, soit déterminer le déphasage pour lequel l'intensité mesurée par les deux capteurs est la même.

Avec ce réglage, les petites variations de la figure d'interférences sont linéaires avec le déphasage, ce qui permet une mesure précise dudit déphasage, en limitant la distorsion. De plus, on améliore la sensibilité grâce à une réponse plus importante en sortie. Enfin, en soustrayant le signal du deuxième capteur **24** au signal du premier capteur **22**, on obtient directement, sans traitement supplémentaire, un signal représentatif du déplacement de la surface de l'échantillon, facilement interprétable.

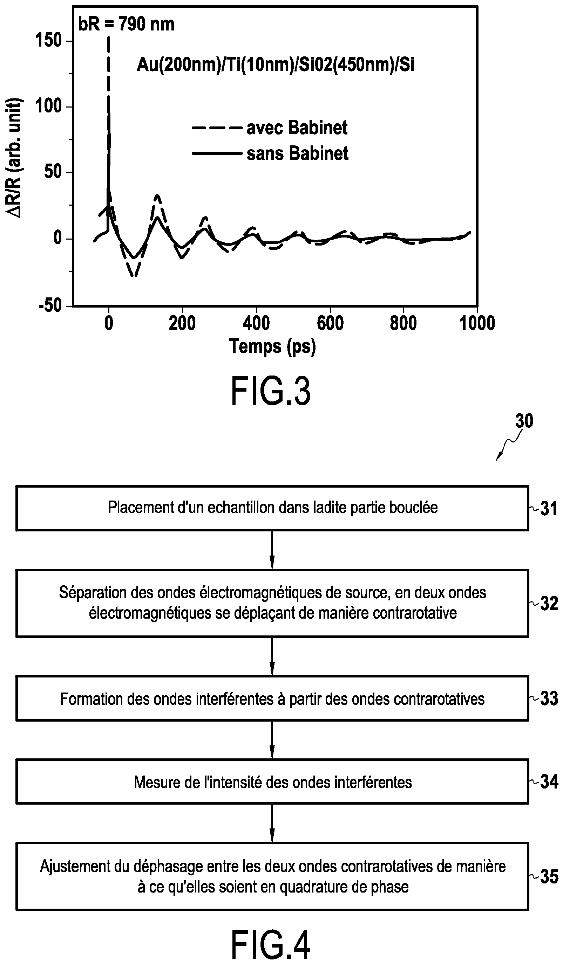

La figure **3** représente ainsi la réponse obtenue avec un échantillon donné, selon que le compensateur de Babinet introduit un déphasage pour obtenir des ondes contrarotatives en quadrature de phase, ou bien selon que le compensateur de Babinet est remplacé par une lame quart d'onde (déphasage de Pi/2). On obtient ainsi deux courbes similaires, mais dont celle correspondant à l'utilisation du Babinet présente une amplitude du signal beaucoup plus importante que l'autre, ce qui prouve bien l'amélioration des résultats pouvant être obtenue avec un moyen de déphasage ajustable dans un tel dispositif de caractérisation.

Alternativement, l'échantillon peut être caractérisé en transmission dans l'interféromètre optique **8** : dans ce cas, l'échantillon est disposé directement dans l'interféromètre optique **8**, le long du trajet des rayons lumineux, et un miroir est prévu en lieu et place de l'échantillon **6** représenté sur la figure **1****.**

La figure **4** représente un organigramme **30** d'un mode de mise en œuvre d'un procédé de caractérisation selon l'invention.

Dans une première étape **31**, on place un échantillon dans ladite partie bouclée, de manière à ce que le chemin optique entre le moyen séparateur et l'échantillon est différent entre les deux ondes contrarotatives, puis, dans une deuxième étape **32**, on sépare les ondes électromagnétiques de source, en deux ondes électromagnétiques se déplaçant de manière contrarotative dans ladite partie bouclée comportant l'échantillon. On forme, dans une troisième étape **33**, des ondes interférentes à partir des ondes contrarotatives en sortie de la partie bouclée, et on mesure l'intensité des ondes interférentes dans une quatrième étape **34.** Enfin, dans une cinquième étape **35**, on ajuste, dans la partie bouclée, le déphasage entre les deux ondes contrarotatives de manière à ce qu'elles soient en quadrature de phase, par exemple en fonction de l'intensité des ondes interférentes.

Selon un mode de mise en œuvre, l'étape **35** comprend la variation du déphasage entre les deux ondes contrarotatives de manière à obtenir des figures d'interférences.

Selon un mode de mise en œuvre, l'étape **35** comprend la variation du déphasage entre les deux ondes contrarotatives de manière à mesurer au moins deux extrema de l'intensité des ondes interférentes, puis l'ajustement du déphasage de manière à obtenir une intensité égale à la moyenne des deux extrema.

Selon un autre mode de mise en œuvre, un deuxième moyen séparateur est monté en-dehors de l'interféromètre optique, le deuxième moyen séparateur recevant des ondes interférentes, et l'étape **35** comprend l'ajustement du déphasage entre les deux ondes contrarotatives de manière à ce que les deux intensités mesurées soient égales.

Le procédé peut comprendre également une étape durant laquelle on forme, dans l'échantillon, une onde mécanique avec une onde électromagnétique pompe, l'onde électromagnétique pompe atteignant l'échantillon après la première onde contrarotative et avant la deuxième onde contrarotative.

Selon ce mode de mise en oeuvre, le procédé peut comprendre aussi une étape durant laquelle on fait varier la durée entre le moment pendant lequel on forme, dans l'échantillon, l'onde mécanique avec une onde électromagnétique pompe, et le moment où la deuxième onde contrarotative atteint l'échantillon.

Ainsi, l'objet selon l'invention permet d'améliorer la précision et la fiabilité des mesures effectuées par un dispositif de caractérisation pompe-sonde comportant un interféromètre de Sagnac. En particulier, en identifiant la possibilité d'introduction d'un déphasage entre les deux ondes contrarotatives par l'échantillon, et en le compensant, le demandeur a réussi à obtenir un dispositif de caractérisation capable de caractériser de manière précise tout type d'échantillon, de manière simple et automatisable.

La présente description de l'invention a été faite avec un compensateur de Babinet comme moyen de déphasage ajustable. Toutefois, l'invention n'est pas limitée à cet exemple de moyen de déphasage ajustable, et tout autre moyen permettant d'introduire un déphasage variable (ajustable) entre les deux ondes contrarotatives de l'interféromètre de Sagnac pourra aussi être utilisé.

De même, la présente description de l'invention a été faite en association avec un dispositif de caractérisation acoustique d'un échantillon. Toutefois, l'invention n'est pas limitée à ce domaine de caractérisation, mais couvre tout domaine dans lequel un interféromètre de Sagnac peut être utilisé pour caractériser un échantillon. En particulier, l'invention peut également être utilisée dans les domaines de caractérisation par relaxations électroniques ou thermiques.

## Revendications

1. Dispositif de caractérisation (1) d'un échantillon, comportant :
- une source (2) configurée pour former des ondes électromagnétiques,
- un capteur optique (22) configuré pour détecter des ondes électromagnétiques interférentes, et
- un interféromètre optique (8) comportant, lors de la caractérisation d'un échantillon :
- une partie bouclée (10) dans laquelle deux ondes électromagnétiques se propagent de manière contrarotative, comprenant un moyen séparateur (12) configuré pour former, d'une part, lesdites deux ondes électromagnétiques contrarotatives à partir des ondes électromagnétiques issues de la source, et, d'autre part, les ondes électromagnétiques interférentes détectées par le capteur à partir desdites deux ondes électromagnétiques contra rotatives,
- un moyen de déphasage entre les deux ondes contrarotatives configuré pour créer un déphasage de Pi/2 entre les deux ondes contrarotatives, et
- un faisceau pompe (4), configuré pour créer une onde acoustique dans l'échantillon,
dispositif dans lequel l'échantillon (6) est destiné à être placé dans l'interféromètre optique (8) de manière à ce que le chemin optique entre le moyen séparateur (12) et l'échantillon (6) est différent entre les deux ondes contrarotatives, l'échantillon introduisant un déphasage en absence d'onde acoustique,
**caractérisé en ce que** le moyen de déphasage est un moyen de déphasage ajustable (14, 16), monté dans la partie bouclée (10) de l'interféromètre optique, pour obtenir, après placement de l'échantillon dans l'interféromètre optique (8), des ondes contrarotatives en quadrature de phase par compensation du déphasage introduit par l'échantillon en absence d'onde acoustique.

2. Dispositif (1) selon la revendication 1, dans lequel l'échantillon (6) est destiné à réfléchir les deux ondes contrarotatives.

3. Dispositif (1) selon la revendication 1 ou 2, dans lequel le moyen de déphasage ajustable comprend un compensateur de Babinet (16).

4. Dispositif (1) selon l'une quelconque des revendications 1 à 3, dans lequel les ondes contrarotatives sont polarisées rectilignement, et dans lequel le moyen de déphasage ajustable comprend un moyen (14) de rotation de 90° de la polarisation rectiligne des ondes contrarotatives, par exemple une lame demi-onde dont les axes sont disposés à 45° de la polarisation rectiligne des ondes contrarotatives.

5. Dispositif (1) selon l'une quelconque des revendications 1 à 4, comprenant également un deuxième moyen séparateur (26) monté en-dehors de l'interféromètre optique (8) et recevant des ondes interférentes, et un deuxième capteur optique (24) configuré pour détecter des ondes électromagnétiques interférentes reçues par le deuxième moyen séparateur (26).

6. Dispositif (1) selon la revendication 5, dans lequel le moyen de déphasage ajustable est configuré pour obtenir, après placement de l'échantillon dans l'interféromètre optique, des ondes interférentes de même intensité sur les deux capteurs (22, 24).

7. Dispositif (1) selon l'une quelconque des revendications 1 à 6, dans lequel le moyen de déphasage ajustable est commandable électriquement, notamment en fonction du signal du ou des capteurs optiques (22, 24).

8. Dispositif (1) selon l'une quelconque des revendications 1 à 7, dans lequel le faisceau pompe (4) est configuré pour créer une onde acoustique dans l'échantillon après le passage de la première onde contrarotative sur l'échantillon et avant le passage de la deuxième onde contrarotative sur l'échantillon.

9. Dispositif (1) selon l'une quelconque des revendications 1 à 8, comprenant également un moyen de modification de la longueur du chemin optique de la deuxième onde contrarotative sur l'échantillon, de manière à faire varier la durée entre la formation de l'onde acoustique dans l'échantillon et le passage de la deuxième onde contrarotative sur l'échantillon.

10. Procédé de caractérisation d'un échantillon (6) par un interféromètre optique (8) comprenant une partie bouclée (10) dans laquelle deux ondes électromagnétiques se propagent de manière contrarotative, comprenant un moyen séparateur (12) configuré pour former, d'une part, lesdites deux ondes électromagnétiques contrarotatives à partir d'ondes électromagnétiques issues d'une source, et, d'autre part, des ondes électromagnétiques interférentes à partir desdites deux ondes électromagnétiques contrarotatives,
dans lequel :
- on place un échantillon dans ladite partie bouclée, de manière à ce que le chemin optique entre le moyen séparateur et l'échantillon est différent entre les deux ondes contrarotatives, l'échantillon introduisant un déphasage en absence d'onde acoustique,
- on sépare les ondes électromagnétiques de source, en deux ondes électromagnétiques se déplaçant de manière contrarotative dans ladite partie bouclée comportant l'échantillon,
- on forme, dans l'échantillon, une onde mécanique avec une onde électromagnétique pompe,
- on forme des ondes interférentes à partir des ondes contrarotatives en sortie de la partie bouclée, et
- on mesure l'intensité des ondes interférentes,
**caractérisé en ce qu'**on ajuste, dans la partie bouclée, le déphasage entre les deux ondes contrarotatives de manière à ce qu'elles soient en quadrature de phase par compensation du déphasage introduit par l'échantillon en absence d'onde acoustique.

11. Procédé selon la revendication 10, dans lequel on ajuste le déphasage entre les deux ondes contrarotatives en fonction de l'intensité des ondes interférentes.

12. Procédé selon la revendication 10 ou 11, dans lequel on fait varier le déphasage entre les deux ondes contrarotatives de manière à mesurer au moins deux extrema de l'intensité des ondes interférentes, puis on ajuste le déphasage de manière à obtenir une intensité égale à la moyenne des deux extrema.

13. Procédé selon la revendication 10 ou 11, dans lequel un deuxième moyen séparateur est monté en-dehors de l'interféromètre optique, le deuxième moyen séparateur recevant des ondes interférentes, et dans lequel :
- on mesure l'intensité des ondes interférentes reçues par le deuxième moyen séparateur, et
- on ajuste le déphasage entre les deux ondes contrarotatives de manière à ce que les deux intensités mesurées soient égales.

14. Procédé selon l'une quelconque des revendications 10 à 13, dans lequel l'onde électromagnétique pompe atteint l'échantillon après la première onde contrarotative et avant la deuxième onde contrarotative.

15. Procédé selon l'une quelconque des revendications 10 à 14, dans lequel on fait varier la durée entre le moment pendant lequel on forme, dans l'échantillon, l'onde mécanique avec une onde électromagnétique pompe, et le moment où la deuxième onde contrarotative atteint l'échantillon.

## Patentansprüche

1. Vorrichtung zum Charakterisieren (1) einer Probe, die Folgendes umfasst:
- eine Quelle (2), konfiguriert zum Bilden von elektromagnetischen Wellen,
- einen optischen Sensor (22), konfiguriert zum Erkennen von störenden elektromagnetischen Wellen, und
- ein optisches Interferometer (8), das bei der Charakterisierung einer Probe Folgendes umfasst:
- einen schleifenförmigen Teil (10), in dem sich zwei elektromagnetische Wellen gegenläufig ausbreiten, umfassend ein Trennmittel (12), so konfiguriert, dass es einerseits die beiden gegenläufigen elektromagnetischen Wellen anhand von von der Quelle stammenden elektromagnetischen Wellen und andererseits die vom Sensor erkannten störenden elektromagnetischen Wellen anhand der beiden gegenläufigen elektromagnetischen Wellen bildet,
- ein Phasenverschiebungsmittel zwischen den beiden gegenläufigen Wellen, konfiguriert zum Erzeugen einer Phasenverschiebung von Pi/2 zwischen den beiden gegenläufigen Wellen, und
- einen Pumpstrahl (4), konfiguriert zum Erzeugen einer akustischen Welle in der Probe,
wobei in der Vorrichtung die Probe (6) zum Platzieren in dem optischen Interferometer (8) bestimmt ist, so dass der Lichtgang zwischen dem Trennmittel (12) und der Probe (6) zwischen den zwei gegenläufigen Wellen unterschiedlich ist, wobei die Probe eine Phasenverschiebung in Abwesenheit einer akustischen Welle einführt,
**dadurch gekennzeichnet, dass** das Phasenverschiebungsmittel ein justierbares Phasenverschiebungsmittel (14, 16) ist, das im schleifenförmigen Teil (10) des optischen Interferometers montiert ist, um nach dem Platzieren der Probe in dem optischen Interferometer (8) gegenläufige Wellen in Phasenquadratur durch Kompensieren der von der Probe in Abwesenheit einer akustischen Welle eingeführten Phasenverschiebung zu erhalten.

2. Vorrichtung (1) nach Anspruch 1, bei der die Probe (6) zum Reflektieren der beiden gegenläufigen Wellen bestimmt ist.

3. Vorrichtung (1) nach Anspruch 1 oder 2, bei der das justierbare Phasenverschiebungsmittel einen Babinet-Kompensator (16) umfasst.

4. Vorrichtung (1) nach einem der Ansprüche 1 bis 3, bei der die gegenläufigen Wellen geradlinig polarisiert sind und wobei das justierbare Phasenverschiebungsmittel ein Mittel (14) zum Drehen der geradlinigen Polarisation der gegenläufigen Wellen um 90° umfasst, zum Beispiel eine Halbwellenplatte, deren Achsen 45° zur geradlinigen Polarisation der gegenläufigen Wellen angeordnet sind.

5. Vorrichtung (1) nach einem der Ansprüche 1 bis 4, die auch ein zweites Trennmittel (26) umfasst, das außerhalb des optischen Interferometers (8) montiert ist und störende Wellen empfängt, und einen zweiten optischen Sensor (24), konfiguriert zum Erkennen der vom zweiten Trennmittel (26) empfangenen störenden elektromagnetischen Wellen.

6. Vorrichtung (1) nach Anspruch 5, bei der das justierbare Phasenverschiebungsmittel zum Erhalten, nach dem Platzieren der Probe in dem optischen Interferometer, von störenden Wellen derselben Intensität auf den beiden Sensoren (22, 24) konfiguriert ist.

7. Vorrichtung (1) nach einem der Ansprüche 1 bis 6, wobei das justierbare Phasenverschiebungsmittel elektrisch gesteuert werden kann, insbesondere in Abhängigkeit von dem Signal der ein oder mehreren optischen Sensoren (22, 24).

8. Vorrichtung (1) nach einem der Ansprüche 1 bis 7, bei der der Pumpstrahl (4) zum Erzeugen einer akustischen Welle in der Probe nach der Passage der ersten gegenläufigen Welle auf der Probe und vor der Passage der zweiten gegenläufigen Welle auf der Probe konfiguriert ist.

9. Vorrichtung (1) nach einem der Ansprüche 1 bis 8, die auch ein Mittel zum Modifizieren der Länge des Lichtgangs der zweiten gegenläufigen Welle auf der Probe umfasst, um die Dauer zwischen der Bildung der akustischen Welle in der Probe und der Passage der zweiten gegenläufigen Welle auf der Probe zu variieren.

10. Verfahren zum Charakterisieren einer Probe (6) durch ein optisches Interferometer (8), umfassend einen schleifenförmigen Teil (10), in dem sich die beiden elektromagnetischen Wellen gegenläufig ausbreiten, umfassend ein Trennmittel (12), so konfiguriert, dass es einerseits die beiden gegenläufigen elektromagnetischen Wellen anhand von von einer Quelle stammenden elektromagnetischen Wellen und andererseits von störenden elektromagnetischen Wellen anhand der beiden gegenläufigen elektromagnetischen Wellen bildet,
wobei:
- eine Probe im schleifenförmigen Teil platziert wird, so dass sich der Lichtgang zwischen dem Trennmittel und der Probe zwischen den beiden gegenläufigen Wellen unterscheidet, wobei die Probe eine Phasenverschiebung in Abwesenheit einer akustischen Welle einführt,
- die elektromagnetischen Quellwellen in zwei elektromagnetische Wellen getrennt werden, die sich gegenläufig in dem die Probe umfassenden schleifenförmigen Teil ausbreiten,
- in der Probe eine mechanische Welle mit einer elektromagnetischen Pumpwelle gebildet wird,
- störende Wellen auf der Basis von gegenläufigen Wellen am Ausgang des schleifenförmigen Teils gebildet werden, und
- die Intensität der störenden Wellen gemessen wird,
**dadurch gekennzeichnet, dass** in dem schleifenförmigen Teil die Phasenverschiebung zwischen den beiden gegenläufigen Wellen so justiert wird, dass sie in Phasenquadratur sind, durch Kompensieren der durch die Probe in Abwesenheit einer akustischen Welle eingeführten Phasenverschiebung.

11. Verfahren nach Anspruch 10, bei dem die Phasenverschiebung zwischen den beiden gegenläufigen Wellen in Abhängigkeit von der Intensität der störenden Wellen justiert wird.

12. Verfahren nach Anspruch 10 oder 11, bei dem die Phasenverschiebung zwischen den beiden gegenläufigen Wellen so variiert wird, dass wenigstens zwei Extreme der Intensität von störenden Wellen gemessen werden, dann die Phasenverschiebung so justiert wird, dass eine Intensität von gleich dem Mittel der beiden Extreme erhalten wird.

13. Verfahren nach Anspruch 10 oder 11, bei dem ein zweites Trennmittel außerhalb des optischen Interferometers montiert wird, wobei das zweite Trennmittel störende Wellen empfängt, und wobei:
- die Intensität der von dem zweiten Trennmittel empfangenen störenden Wellen gemessen wird, und
- die Phasenverschiebung zwischen den beiden gegenläufigen Wellen so justiert wird, dass die beiden gemessenen Intensitäten gleich sind.

14. Verfahren nach einem der Ansprüche 10 bis 13, bei dem die elektromagnetische Pumpwelle die Probe nach der ersten gegenläufigen Welle und vor der zweiten gegenläufigen Welle erreicht.

15. Verfahren nach einem der Ansprüche 10 bis 14, bei dem die Dauer zwischen dem Moment, in dem in der Probe die mechanische Welle mit einer elektromagnetischen Pumpwelle gebildet wird, und dem Moment, in dem die zweite gegenläufige Welle die Probe erreicht, variiert wird.

## Claims

1. A device (1) for characterising a sample, comprising:
- a source (2) configured to form electromagnetic waves;
- an optical sensor (22) configured to detect interfering electromagnetic waves; and
- an optical interferometer (8) comprising, during the characterisation of a sample:
- a looped portion (10), in which two electromagnetic waves propagate in a counter-rotating manner, comprising a splitter means (12) configured to form, on the one hand, said two counter-rotating electromagnetic waves from electromagnetic waves originating from the source and, on the other hand, the interfering electromagnetic waves detected by the sensor from said two counter-rotating electromagnetic waves;
- a means for phase-shifting between the two counter-rotating waves, said means being configured to create a phase-shift of Pi/2 between the two counter-rotating waves; and
- a pump beam (4) configured to create an acoustic wave in the sample;
in which device the sample (6) is intended to be placed in the optical interferometer (8) so that the optical path between the splitter means (12) and the sample (6) is different between the two counter-rotating waves, the sample introducing a phase-shift in the absence of an acoustic wave,
**characterised in that** the phase-shift means is an adjustable phase-shift means (14, 16), mounted in the looped portion (10) of the optical interferometer, in order to obtain, after placing the sample in the optical interferometer (8), counter-rotating waves in phase quadrature through compensation of the phase-shift introduced by the sample in the absence of an acoustic wave.

2. The device (1) as claimed in claim 1, wherein the sample (6) is intended to reflect the two counter-rotating waves.

3. The device (1) as claimed in claim 1 or 2, wherein the adjustable phase-shift means comprises a Babinet compensator (16).

4. The device (1) as claimed in any one of claims 1 to 3, wherein the counter-rotating waves are rectilinearly polarised, and wherein the adjustable phase-shift means comprises a means (14) for rotating the rectilinear polarisation of the counter-rotating waves by 90°, for example a half-wave plate, the axes of which are disposed at 45° to the rectilinear polarisation of the counter-rotating waves.

5. The device (1) as claimed in any one of claims 1 to 4, further comprising a second splitter means (26) mounted outside the optical interferometer (8) and receiving interfering waves, and a second optical sensor (24) configured to detect interfering electromagnetic waves received by the second splitter means (26).

6. The device (1) as claimed in claim 5, wherein the adjustable phase-shift means is configured to obtain, after placing the sample in the optical interferometer, interfering waves of the same intensity on the two sensors (22, 24).

7. The device (1) as claimed in any one of claims 1 to 6, wherein the adjustable phase-shift means is electrically controllable, particularly as a function of the signal of the one or more optical sensors (22, 24).

8. The device (1) as claimed in any one of claims 1 to 7, wherein the pump beam (4) is configured to create an acoustic wave in the sample following the passage of the first counter-rotating wave on the sample and before the passage of the second counter-rotating wave on the sample.

9. The device (1) as claimed in any one of claims 1 to 8, further comprising a means for modifying the length of the optical path of the second counter-rotating wave on the sample, so as to vary the duration between the formation of the acoustic wave in the sample and the passage of the second counter-rotating wave on the sample.

10. A method for characterising a sample (6) using an optical interferometer (8) comprising a looped portion (10), in which two electromagnetic waves propagate in a counter-rotating manner, comprising a splitter means (12) configured to form, on the one hand, said two counter-rotating electromagnetic waves from electromagnetic waves originating from a source and, on the other hand, interfering electromagnetic waves from said two counter-rotating electromagnetic waves,
wherein:
- a sample is placed in said looped portion, so that the optical path between the splitter means and the sample is different between the two counter-rotating waves, the sample introducing a phase-shift in the absence of an acoustic wave;
- the source electromagnetic waves are split into two electromagnetic waves moving in a counter-rotating manner in said looped portion comprising the sample;
- a mechanical wave is formed in the sample with an electromagnetic pump wave;
- interfering waves are formed from the counter-rotating waves output from the looped portion; and
- the intensity of the interfering waves is measured;
**characterised in that** the phase-shift is adjusted, in the looped portion, between the two counter-rotating waves so that they are in phase quadrature through compensation of the phase-shift introduced by the sample in the absence of an acoustic wave.

11. The method as claimed in claim 10, wherein the phase-shift between the two counter-rotating waves is adjusted as a function of the intensity of the interfering waves.

12. The method as claimed in claim 10 or 11, wherein the phase-shift between the two counter-rotating waves is varied so as to measure at least two extrema of the intensity of the interfering waves, then the phase-shift is adjusted so as to obtain an intensity that is equal to the average of the two extrema.

13. The method as claimed in claim 10 or 11, wherein a second splitter means is mounted outside the optical interferometer, the second splitter means receiving interfering waves, and wherein:
- the intensity of the interfering waves received by the second splitter means is measured; and
- the phase-shift between the two counter-rotating waves is adjusted so that the two measured intensities are equal.

14. The method as claimed in any one of claims 10 to 13, wherein the pump electromagnetic wave reaches the sample after the first counter-rotating wave and before the second counter-rotating wave.

15. The method as claimed in any one of claims 10 to 14, wherein the duration is varied between the moment during which the mechanical wave is formed in the sample with a pump electromagnetic wave and the moment when the second counter-rotating wave reaches the sample.
